# EUROPÄISCHE PATENTSCHRIFT

(11) **EP 3 094 690 B1**
(45) Veröffentlichungstag und Bekanntmachung des Hinweises auf die Patenterteilung: **04.10.2017**
(21) Anmeldenummer: 15701425.9
(22) Anmeldetag: 02.01.2015
(51) Int. Cl.: C09D 5/00

(54) **VERFAHREN ZUR HERSTELLUNG EINES LACKS FÜR HOLZINSTRUMENTE, DIESER LACK ALS ERZEUGNIS, SOWIE VERFAHREN ZU DESSEN APPLIKATION**
METHOD FOR PRODUCING A VARNISH FOR WOODEN INSTRUMENTS, SAID VARNISH AS A PRODUCT AND METHOD FOR APPLICATION THEREOF
PROCÉDÉ POUR LA PRODUCTION D'UN VERNIS POUR INSTRUMENTS EN BOIS, LE VERNIS EN TANT QUE PRODUIT ET PROCÉDÉ POUR SON APPLICATION

(30) Priorität: 15.01.2014 CH 42142014
(43) Veröffentlichungstag der Anmeldung: 23.11.2016
(73) Patentinhaber: Reichlin, Paul J., 8830 Samstagern (CH); Reichlin-Moser, Barbara, 8830 Samstagern (CH)
(72) Erfinder: Reichlin, Paul J., 8830 Samstagern (CH); Reichlin-Moser, Barbara, 8830 Samstagern (CH)
(74) Vertreter: Felber, Josef
(86) Internationale Anmeldenummer: PCT/IB2015/050024
(87) Internationale Veröffentlichungsnummer: WO 2015/107433

(56) Entgegenhaltungen:
- KR-A- 20130 048 740
- RU-C2- 2 188 218

## Beschreibung

Diese Erfindung betrifft ein Verfahren zur Herstellung eines Lacks, der geeignet ist, Holzinstrumente damit zu behandeln. Ausserdem betrifft die Erfindung das nach dem Verfahren hergestellte Erzeugnis, also den Lack an und für sich in seiner spezifischen Zusammensetzung, und schliesslich betrifft sie auch das Verfahren, den Lack auf ein Holzinstrument zu applizieren, insbesondere aber nicht abschliessend auf Streichinstrumente. Der Lack ist besonders geeignet zum Behandeln von Violinen, Violen, Celli und Kontrabässen.

Wenn man die wunderschönen Lacküberzüge der Instrumente der alten italienischen und englischen Meister des Geigenbaus aus dem 17. Jahrhundert bewundert und mit dem Erscheinungsbild von neuzeitlichen Geigen vergleicht, so fällt auf, dass sie grundverschieden sind und auch die Abnützungen so ganz anders sind. Die Farben und Farbnuancen an den modernen Instrumenten sind im Vergleich zu den alten Meisterwerken grob und vereinfacht.

Schon viele haben den Versuch unternommen, mit speziellen Lackmischungen und allerlei "geheimen" Rezepten an die Meisterschaft eines Stradivari-Lacks heranzukommen, und wohl jeder Geigenbauer unternahm schon seine Lackversuche und greift auf seine eigenen Rezepturen zurück. Doch Tatsache ist, dass die Versuche von Tausenden von Geigenbauern über die letzten 200 Jahre nie zu etwas Vergleichbarem führten, was an die Lackierung eines schönen Instrumentes aus dem 17. Jahrhundert herankäme.

Freilich kann man die verfügbare Literatur zu alten Lackrezepten und Zubereitungen von Lack und Farbmitteln studieren, etwa die Zeugnisse von grossen Kaseinmalern, etwa das Traktat von **Cennino Cennini** (* um 1370 in I-Colle di Val d'Elsa, † um 1440 in I-Firenze). Er war ein berühmter zeitgenössischer Maler und Verfasser des Handbuches *Libro dell'arte o trattato della pittura.* Es gibt viele andere Texte zum Thema Kasein. In alten Rezepten wird immer wieder von klaren, glänzenden, weissen Firnissen gesprochen. In einem Markneukirchner Meisterbrief etwa ist von einem schönen gelben Lack die Rede. In D-Markneukirchen wurde 1677 eine neue Geigenmacherinnung gegründet, in der auch ortsfremde Meister aufgenommen wurden. Auch alte englische Lacke aus dem 16. und 17. Jahrhundert sind identisch mit deutschen, französischen und italienischen Lacken aus der Zeit. Gewisse Historiker nehmen an, dass die Lackierkunst im 16., 17. und 18. Jahrhundert ein Zunftgeheimnis war. Das ist zwar denkbar, doch fällt es etwas schwer zu glauben, dass ein solches doch weitherum praktiziertes Rezept nie einem breiteren Kreis zugänglich wurde bzw. im patentrechtlichen Sinne öffentlich bekannt wurde.

Der Deutsche Verein Turba-Delirantium bemüht sich, das Know-How der damaligen Zeit zu erschliessen. Ein typisches Rezept dessen Mitglieds Gunter Krebs lautet (http://turba-delirantium.skyrocket.de/malerei/kasein-tempera.htm): *Man nehme Magerquark, den man in einem Leinentuch etwas entwässert. Dazu gibt man gelöschten Kalk, vorzugsweise Sumpfkalk, im Verhältnis 5:1. Der Quark wird unter Zugabe von Kalk sofort fliessend. Dann emulgiert man z.B. mit Leinöl, Leinölfirnis oder Walnussöl. Danach werden Pigmente dazugerieben und mit 2 bis 3 Teilen Wasser verdünnt. Kaseinmalerei ist sodann am besten auf einer Kaseingrundierung oder auf einem Brettleimgrund haltbar. Kaseintempera weist ausser einem gutem Bindevermögen auch eine gute Leuchtkraft und Helligkeit auf. Der Farbstrich ist flüssiger und schärfer als bei der Ei-Tempera. Die angeriebene Menge kann nur mehrere Tage lang wiederwendet werden. Anreiben der Temperafarben: Es ist zweckmässig, die Farbpigmente zuerst in wenig Wasser anzusetzen und erst bei Bedarf mit der Emulsion zu mischen. Die Gläser müssen gut verschlossen aufbewahrt werden, mit etwas über der Farbe stehen gelassenem Wasser. Das Anreibeverhältnis von Kaseinfarben ist sehr unterschiedlich und erfordert einige Experimente. Malgrundierung: Emulsionen haften nicht gut auf fetten Gründen wie Öl- und Halbölgründe. Das wässrige Bindemittel der Tempera löst den mageren Grund etwas an und bietet dadurch eine gute Haftung der Temperaschicht auf dem Untergrund. Ein weisser Gipsgrund auf Holz ist sehr zweckmässig. Gut sind auch Kaseingründe auf Holz, Leinwand, Pappe, Papier und Mauerwerk.*

Wie man erkennt, liest sich eine solche Rezeptur ziemlich "alchemistisch" - wenig technisch exakt. Daher macht sich die Überzeugung breit, dass gegen Ende des 18. Jahrhunderts eine neue Denkart gewachsen war, die durch den Fortschrittsglauben geprägt und durch die sichtbare moderne Chemie entstanden sein musste. Diese Denkschule und Praktik vermag das Verschwinden des klassischen Lacks zu erklären. Die alte Lackherstellung entsprach nicht der modernen technischen Lackzubereitung, sondern kannte einen ganz anderen empirischen Ablauf, der nur durch direkte Weitergabe vermittelt werden konnte.

Folgende speziellen und aufschlussreichen Beobachtungen an alten italienischen Instrumenten sind von Interesse für den Auftrag des Lackes in damaliger Zeit:
- Bei einer Petrus-Guarnerius-Geige von Katharina Kobelt gibt es ungeschliffenen, klumpig aufgetragenen Lack unter dem Griffbrett.
- Das Joseph-Guarnerius-Cello von Dieter Stähelin zeigt Reste von gefärbten Klumpen im Lack.
- Eine Rogeri-Geige zeigt eine sehr dünne originale Lackierung. Ihr Untergrund hätte unmöglich nur durch Nachdunkeln die besondere Intensität erreichen können.
- Der Lack einer Venediger-Geige ist viel dicker als jener einer Florentiner-Geige.
- In einem Brief vom 11. August 1708 an einen ungeduldigen Kunden schrieb Stradivari, dass er die Hitze der Sonne brauche, um lackieren zu können. Und dem englischen Edelmann blieb nichts anderes übrig, als zwei Monate zu warten, bis die Instrumente trocken und fertig gestellt waren.
- Die Abtragung des Lackes ist bei den verschiedenen Instrumente sehr unterschiedlich: Bei Del-Gesü bröckelig, bei einer Stradivari-Geige zeigt sich die Abnützung sehr sanft, wobei aber bei dicken, roten Lacken eine sehr starke Craquelet auffällt. Bei einer Amati-Geige beinhalten die Lackfarben mit Sicherheit Safran.

Für die Suche nach einem Lack, der an die alten Lacke des 17. Jahrhunderts herankommt, werden aussergewöhnlich grosse Anstrengungen unter der internationalen Gemeinde der Gegenbauer unternommen, Anstrengungen, über die sich ein Laie kaum Vorstellungen macht. Ein Zeugnis dafür legt etwa das im Format A3(!) erschienene, 363 Seiten starke Buch **Stradivari's Varnish,** von Stefan Peter Greiner und Brigitte Brandmair aus dem Jahr 2010 ab (ISBN 978-3-00028537-0). Dieses Buch über den **Schichtungsaufbau von Stradivaris Lack** muss bei jedem Laien grösstes Erstaunen auslösen, wird doch darin über umfangreichste Untersuchungen an zahlreichen Stradivari-Instrumenten berichtet. Dabei wurde zum Beispiel untersucht: Die 1. Schicht, die Imprägnierung, die 2. Schicht, die Beizung und Porenfüllung, die 3. Schicht, der Grundlack, die 4. Schicht, der Farblack. Dann wurde die Oberflächenstruktur untersucht, das Abtragungsverhalten, die Cremoneser Lackierung nach 1740 usw. Die Lackaufbauten wurden mit zahlreichen Technologien untersucht. Angewandt wurde zum Beispiel die VIS- und UV-Mikroskopie, Videomikroskopie, histochemische Analysen, FTIR sowie Micro-FTIR, REM/EDX, GC/MS und ELISA/IFM. Weiter wurden photografische, stratigrafische, spektralanalytische Untersuchungen gemacht, an Duzenden von Instrumente, und alles wurde akribisch protokolliert und mit Dutzenden von Fotografien dokumentiert. Es waren 121 Institutionen und Individuen aus verschiedensten Ländern in die Forschungs- und Analysearbeiten involviert! Doch einen mit Stradivari-Lack in Beschaffenheit, Erscheinung und ästhetischer Wirkung vergleichbarer Lack ist immer noch nicht gefunden, geschweige denn erhältlich.

Die Aufgabe der vorliegenden Erfindung besteht deshalb darin, ein Verfahren zur Herstellung eines Lacks für Holzinstrumente, anzugeben, welcher in Bezug auf seine Beschaffenheit und Wirkung möglichst nahe an die alten italienischen Lacke des 17. Jahrhunderts wie an Stradivari-Instrumenten vorhanden herankommt. Weiter ist es eine Aufgabe der Erfindung, einen solchen Lack als Erzeugnis zu finden, sowie schliesslich ein Verfahren anzugeben, wie ein solcher Lack appliziert wird, sodass das behandelte Holz auch unter dem UV-Licht die gleiche Erscheinung zeigt wie ein Holzinstrument mit italienischem Lack aus dem 17. Jahrhundert, namentlich wie ein Stradivari-Holzinstrument.

Diese Aufgabe wird gelöst von einem Verfahren zur Herstellung eines Lack für Holzinstrumente, das sich dadurch auszeichnet, dass er durch Zusammenmischen von zwei gesondert zubereiteten Emulsionen erzeugt wird, nämlich einer ersten Emulsion, enthaltend
- Kasein, erzeugt aus Magerquark und Grubenkalk,
- Safran in Wasser aufgelöst,
- Krapp in Wasser aufgelöst,
sowie einer zweiten Emulsion, enthaltend
- Terpentin
- Strassburger Terpentin oder Venetianischer Terpentin
- Pottasche in Wasser aufgelöst.

Die Aufgabe wird weiter gelöst von einem Lack für Holzinstrumente, bestehend aus
- Kasein, erzeugt aus Magerquark und Grubenkalk,
- Safran, in Wasser aufgelöst,
- Krapp, in Wasser aufgelöst,
- mehreren Terpentinen,
- Pottasche, in Wasser aufgelöst.

Und schliesslich wird die Aufgabe gelöst von einem Verfahren zum Applizieren eines solchen Lacks, das sich dadurch auszeichnet, dass das Holz zunächst vorbehandelt wird, indem
a) eine in Wasser verdünnte Mischung Kasein auf das Holz aufgetragen wird,
b) in Wasser verdünnte Salpetersäure aufgetragen und der Auftrag getrocknet wird,
c) der Schritt b) bedarfsweise ein- oder mehrmals wiederholt wird.
   dann das vorbehandelte Holz grundiert wird, indem
d) in Wasser verdünntes Kasein einmal auf das Holz aufgetragen wird,
e) diese Grundierung fein geschliffen wird,
   dann das grundierte Holz lackiert wird, indem
f) Lack aus Kasein, Safran in erwärmtem Wasser gelöst, Krapp in Wasser gelöst, Terpentin, Pottasche in Wasser auflöst, mit einem Pinsel auftragen wird und der Aufstrich hernach ausgetrocknet wird,
g) der ausgetrocknete Lack mit einem feinen Tuch fein geschliffen und hernach mit einem weichen Lappen poliert wird.

Nachfolgend wird der mühsame Werdegang, das Herantasten und das Finden dieser Methoden und Bestandteile nachgezeichnet. Ein Durchbruch wurde erst erzielt, als man sich nach langem Experimentieren ohne jeglichen entscheidenden Erfolg der Kaseintechnik zuwandte. Die Grundüberlegung lautete, anstatt Farbpigmente neu Harze zu verwenden! Die meisten alten Rezepte aus der Zeit von 1700 bis 1850 brauchen als Ingredienzien alle die verschiedenen bekannten Harze. Zudem kommen Leinöl, Nussöl, Terpentinöl, über Lavendel- und Rosmarinöl bis Weingeist, Spiritus und Branntwein zur Anwendung. Wie bei jedem Lack bestand auch bei der Kaseintempera-Methode die grosse Schwierigkeit darin, genügend Farbe in die dünne Lackschicht zu bringen.

In der Literatur zur Kaseintechnik findet man keine brauchbaren Angaben, und daher musste ein "wissenschaftlicher" Weg verlassen werden, und es half bloss die Empirik weiter, mit unzähligen Versuchen. Von Anfang an zeigte sich bei diesen Kasein-Temperaversuchen, dass bei einer gut aufgetragenen Harztempera, nach dem Trocknen das Erscheinungsbild unter der ultravioletten Lampe in den bekannten Variationen der alten originalen, klassischen Lacke fluoreszierte, je nach Farbzugabe opak-weiss, gelblich, rosa.

Ziemlich bald stellte sich aber auch heraus, dass es eine gute Grundierung braucht. Eine dünne Kasein-Grundierung war naheliegend. Allerdings war das Resultat zunächst nicht befriedigend. Dafür ist der Auftrag von Farbtempera relativ einfach. In der Summe der Erkenntnisse zeigte es sich, dass man die Harztempera in ein optimales Verhältnis mit allen Ingredienzien bringen kann. Man kann sie aber nicht beliebig dünner bzw. streichbarer oder dicker bis hin zu pastös aufstreichbar machen. Zudem ist es nicht einfach, den nächsten Überzug aufzutragen, ohne dass der vorherige aufgelöst wird.

Die gemachten Erfahrungen zeigten, dass die Harztempera beim Auftragen sehr schnell antrocknet. Sie braucht aber einige Zeit, um wirklich auszuhärten. Ein weiterer Themenkreis betrifft die Grundierung des Holzes. Die alte Gold-Grundtonung, von der alle Geigenbauer träumen, war dabei eine erstrebenswerte Vorgabe. Bei frühen Beizrezepten wird viel Salpetersäure verwendet, meistens aber in sehr schwachen Mischungen, was heute aber eher verpönt ist. Um die Wirkung zu verstärken, wurden die damit bestrichenen Holzoberflächen für kurze Zeit der starken Sonne oder auch der Wärme eines Feuers ausgesetzt, bis sie gleichmässig positiv braun wurden. Die Versuche zeigten, dass sich mit dieser Methode nur eine bestimmte Bräunung erzielen lässt - aber nicht eine beliebig dunkle. Sehr negativ in Erscheinung tritt dabei, dass sich angeschnittene Holzfasern viel stärker fleckig dunkelbraun bis schwarz färbten. Nach unzähligen weiteren Versuchen wurde festgestellt, dass eine zuerst aufgetragene, schwache Kasein-Mischung, wenn sie 24 Stunden getrocknet war, diese fleckige blasse Salpeterbräunung verhinderte. Die Bräunung der Beizung kann scheinbar mit dem Prozentsalz der enthaltenen Salpetersäure reguliert werden. Kaseintempera scheint die Kasein/Salpeter-Grundierung zu neutralisieren.

Die schwache, dunkle, schleierhafte Bräunung, die man unter der Ultraviolett-Lampe bei alten italienischen Instrumenten feststellen kann, gleicht dieser Salpeter-Positiv-Beizung sehr überraschend genau. Zu diesem Zeitpunkt dachte man, etwas wirklich Brauchbares für die Reproduktion der alten italienischen Lacke gefunden zu haben. Das Ganze war aber sehr kompliziert in der Anwendung, aber das schien einfach nötig zu sein.

Bei den Farben spielt der pH-Wert die entscheidende Rolle. Je nachdem sehen sie anders aus! Bei Kaseintempera kann man den wässrigen Teil und den öligen Teil färben. Lange Zeit glaubte man, es müsste möglich sein, genügend Farbe in den Kaseintempera-Lackauftrag einzubringen, um den unvergleichlichen, so sanften, aber intensiv leuchtenden, italienischen alten Lack hervorzubringen. Diese Versuche aber scheiterten an der natürlichen Aufnahmegrenze der Tempera.

Daher muss man davon ausgehen, dass die Kaseintempera-Harzlacke gefärbt sind. Die starke Färbung ist zwischen den Temperalackierungen als separate, schwach gebundene Kaseinfarbschicht aufgetragen. Bei Stradivari sind bei dunklen, roten oder braunen Lackfarben zwischen den Tempera-Anstrichen nur leicht mit Kasein gebundene Farbschichten aufgetragen.

Um Lacke dunkler zu machen, eignet sich Sepia gut. Krapp, gewonnen aus der Krappwurzel, ist gut verwendbar, da Kaseintempera basisch ist und Krapp basisch rot wird (hingegen wenn sauer, dann gelb). Safran eignet sich basisch gut. Lack könnte wahrscheinlich auch etwas Elfenbeinschwarz als Tönung enthalten. Das Schleifen und Polieren des fertigen Lacks ist relativ gut möglich. Der Lack löst sich aber mit Ölschleifmitteln relativ schnell, wenn er nicht ganz ausgetrocknet ist. Bei langem Austrocknen kann nach einigen Monaten aber feines Craquelet entstehen.

Zusammenfassend muss heute der Schluss gezogen werden, dass das Lackieren in früherer Zeit grundsätzlich einen handwerklich-empirischen Ablauf hatte und nicht einen - wie wir heute denken und handeln - chemisch-wissenschaftlichen Hintergrund. Die Erfahrung musste in direkter Anwendung weiter gegeben worden sein und nicht einfach reproduzierbare Rezepte, wie man sich das heute für Lackierarbeiten gewohnt ist!

Der Lack und sein Herstellungsverfahren, das nachfolgend offenbart wird, ist das Ergebnis von Tausenden von Stunden mit Experimenten. Hunderte von weissen Geigen mit und ohne Grundierung wurden bestrichen. Mit Dutzenden von Restauratorinnen und Restauratoren und mit vielen Geigenbauern wurden Diskussionen geführt. Bei den Experimenten wurden alle möglichen Farb- und Färbemittel eingesetzt, die aber alle keine befriedigenden Resultate ergaben. Auch die feine Craquelierung, die man auf alten Instrumenten noch hie und da findet, stellte sich ohne Kunstgriffe nicht ein.

Im Folgenden wird dieses Lackrezept also im Detail vorgestellt, sodass damit Lack herstellbar ist, der im Erscheinungsbild, in seiner Konsistenz, ja sogar unter dem UV-Licht, was als "Lackmus-Test" gilt, dasselbe zeigt wie der Lack einer Stradivari-Geige. Denn einer Stradivari-Lack, unter dem UV-Licht betrachtet zeigt ein sehr spezifisches unverwechselbares Bild, das bisher noch von keiner in der Szene bekannten Lackierung nur annähernd erreicht wird. Daher kann man mit einiger Berechtigung von der Neu-Erfindung des Stradivari-Lackes sprechen, einer Lackierung, nach der die Fachwelt seit vielen Jahrzehnten verzweifelt sucht, aber bisher nie zu reproduzieren imstande war.

Zunächst bereitet man Kasein vor, wie folgt:
Man nimmt Bio-Magerquark, mittelstark, und presst ihn mit Käseleinen aus. Dann nimmt man 5 Teile vom gewonnenen entwässerten Magerquark und gibt einen Teil holzgebrannten Grubenkalk bei und erzeugt eine homogene Mischung.

Es folgt die Vorbehandlung des Holzes für die spätere Lackierung mit diesem Kasein: Man verdünnt einen Teil Kasein mit 8 Teilen Wasser und trägt diese Mischung einmalig auf. Hernach verdünnt man einen Teil Salpetersäure mit 5 Teilen Wasser und trägt diese Lösung 3 Mal nacheinander auf. Nach jedem Auftrag wird derselbe an der Sonne oder mit einem Föhn getrocknet, was zu einer Bräunung führt. Lässt man dann das so vorbehandelte Holz 3 Tage am Schatten stehen, so stellt sich eine goldene Bräune ein.

Jetzt gilt es, die Grundierung für das spätere Lackieren vorzubereiten. Hierzu verdünnt man einen Teil Kasein mit fünf Teilen Wasser. Diese Lösung wird einmal aufgetragen und dann lässt man den Auftrag gut trocknen. Der trockene Auftrag wird mit einem 400er Schleiftuch oder mit einem Katzenschwanz geschliffen. Diese Vorbehandlung sowie die Grundierung erweisen sich als entscheidend für den späteren Erfolg der Lackierung, soll diese in Beschaffenheit, Erscheinung und ästhetischer Wirkung an die Lackierung einer Stradivari-Geige herankommen. Erst jetzt, nach dieser Vorbehandlung und Grundierung des Holzes, kommt die eigentliche Lackierung. Der Lack wird wie folgt zusammengemischt:
- 1.5 Volumenteile Kasein,
- 2 Volumenteile Safran in erwärmtem Wasser konzentriert auflösen,
- 2 Volumenteile Krapp in Wasser konzentriert auflösen.

Diese 5.5 Volumenteile zusammenmischen und emulgieren ergibt eine Emulsion 1.

Eine zweite Emulsion wird wie folgt erzeugt:
- 3 Volumenteile Terpentin,
- 3.75 Volumenteile Strassburger Terpentin oder Venetianischer Terpentin,
- 5 Tropfen Pottasche in Wasser auflösen.

Die Komponenten der zweien Emulsion zusammenmischen und emulgieren. Das ergibt die Emulsion 2. Das Strassburger Terpentin besteht im Wesentlichen aus Weisstannenharz. Das Venetianische Terpentin andererseits besteht im Wesentlichen aus Lärchenharz und wird mit Safran und Krappwurzeln eingefärbt. Das Grundproblem besteht im Prinzip immer darin, die Farbe in den Lack einzubringen, doch mit der obigen Rezeptur gelingt das.

Die Emulsion 1 und Emulsion 2 werden zusammengemischt, zu einem homogenen Lack. Dieser wird mit einem Pinsel auf das grundierte Holz aufgetragen, und hernach lässt man den Auftrag in einer trockenen, schattigen Umgebung gut austrocknen.

Diese Kasein-Tempera wird alleine schon durch die Trocknung nahezu durchsichtig. Nach der Austrocknung des Lackes wird dieser mit einem feinen Tuch mit Tripelerde und Olivenöl fein geschliffen und hernach mit einem weichen Lappen poliert. Damit wird ein Lack erzeugt, der auch vom Fachmann kaum vom Lack einer Stradivari Geige unterscheidbar ist.

## Patentansprüche

1. Verfahren zur Herstellung eines Lack für Holzinstrumente, **dadurch gekennzeichnet, dass** er durch Zusammenmischen von zwei gesondert zubereiteten Emulsionen erzeugt wird, nämlich einer ersten Emulsion, enthaltend
• Kasein, erzeugt aus Magerquark und Grubenkalk,
• Safran in Wasser aufgelöst,
• Krapp in Wasser aufgelöst,
sowie einer zweiten Emulsion, enthaltend
• Terpentin,
• Strassburger Terpentin oder Venetianischer Terpentin,
• Pottasche in Wasser aufgelöst.

2. Verfahren zur Herstellung eines Lack für Holzinstrumente nach Anspruch 1, **dadurch gekennzeichnet, dass** er durch Zusammenmischen von zwei gesondert zubereiteten Emulsionen erzeugt wird, nämlich einer ersten Emulsion, enthaltend
• 1.5 Volumenteile Kasein, erzeugt aus Magerquark und holzgebranntem Grubenkalk,
• 2 Volumenteile Safran in erwärmtem Wasser konzentriert aufgelöst,
• 2 Volumenteile Krapp in Wasser konzentriert aufgelöst,
sowie einer zweiten Emulsion, enthaltend
• 3 Volumenteile Terpentin,
• 3.75 Volumenteile Strassburger Terpentin oder Venetianischer Terpentin,
• 5 Tropfen Pottasche in Wasser aufgelöst.

3. Lack für Holzinstrumente, bestehend aus
• Kasein, erzeugt aus Magerquark und Grubenkalk,
• Safran, in Wasser aufgelöst,
• Krapp, in Wasser aufgelöst,
• mehrere Terpentine,
• Pottasche, in Wasser aufgelöst.

4. Lack für Holzinstrumente nach Anspruch 3, bestehend aus
• 1.5 Volumenteilen Kasein, erzeugt aus Magerquark und holzgebranntem Grubenkalk,
• 2 Volumenteilen Safran in erwärmtem Wasser konzentriert aufgelöst,
• 2 Volumenteilen Krapp in Wasser konzentriert aufgelöst,
• 3 Volumenteilen Terpentin,
• 3.75 Volumenteilen Strassburger Terpentin oder Venetianischer Terpentin
• 5 Tropfen Pottasche in Wasser aufgelöst.

5. Verfahren zum Applizieren eines Lacks nach einem der Ansprüche 3 oder 4, **dadurch gekennzeichnet, dass** das Holz zunächst vorbehandelt wird, indem
a) eine in Wasser verdünnte Mischung Kasein auf das Holz aufgetragen wird,
b) in Wasser verdünnte Salpetersäure aufgetragen und der Auftrag getrocknet wird,
c) der Schritt b) bedarfsweise ein- oder mehrmals wiederholt wird.
dann das vorbehandelte Holz grundiert wird, indem
d) in Wasser verdünntes Kasein einmal auf das Holz aufgetragen wird,
e) diese Grundierung fein geschliffen wird,
dann das grundierte Holz lackiert wird, indem
f) Lack aus Kasein, Safran in erwärmtem Wasser gelöst, Krapp in Wasser gelöst, Terpentin, Pottasche in Wasser auflöst, mit einem Pinsel auftragen wird und der Aufstrich hernach ausgetrocknet wird,
g) der ausgetrocknete Lack mit einem feinen Tuch fein geschliffen und hernach mit einem weichen Lappen poliert wird.

6. Verfahren zum Applizieren eines Lacks nach einem der Ansprüche 3 oder 4, **dadurch gekennzeichnet, dass** das Holz zunächst vorbehandelt wird, indem
a) eine in Wasser verdünnte Mischung Kasein aus Magerquark und holzgebranntem Grubenkalk auf das Holz aufgetragen wird,
b) in Wasser verdünnte Salpetersäure aufgetragen und der Auftrag an der Sonne oder mittels Warmluft getrocknet wird,
c) der Schritt b) bedarfsweise ein- oder mehrmals wiederholt wird,
dann das vorbehandelte Holz grundiert wird, indem
d) in Wasser verdünntes Kasein einmal auf das Holz aufgetragen wird,
e) diese Grundierung mit 400er-Schleiftuch oder mit einem Katzenschwanz geschliffen wird,
dann das grundierte Holz lackiert wird, indem
f) Lack aus einer aus Mischung von zwei Emulsionen aufgetragen wird, die erste Emulsion bestehend aus
• 1.5 Volumenteilen Kasein, erzeugt aus Magerquark und holzgebranntem Grubenkalk,
• 2 Volumenteilen Safran in erwärmtem Wasser konzentriert aufgelöst,
• 2 Volumenteilen Krapp in Wasser konzentriert aufgelöst,
sowie einer zweiten Emulsion, enthaltend
• 3 Volumenteilen Terpentin,
• 3.75 Volumenteilen Strassburger Terpentin oder Venetianischem Terpentin,
• 5 Tropfen Pottasche in Wasser aufgelöst,
mit einem Pinsel auftragen wird und der Aufstrich hernach ausgetrocknet wird,
g) der ausgetrocknete Lack mit einem feinen Tuch mit Tripelerde und Olivenöl fein geschliffen und hernach mit einem weichen Lappen poliert wird.

## Claims

1. Procedure for producing a varnish for wooden instruments, **characterized in that** the varnish is produced by mixing two separately prepared emulsions, namely a first emulsion containing
• Casein, made of low fat curd cheese and chalk of a pit,
• Saffron which is dissolved in water,
• Madder which is dissolved in water,
as well as a second emulsion containing
• Terpentine,
• Terpentine of Strassburg or Venice,
• Potassium carbonate which is dissolved in water.

2. Procedure for producing a varnish for wooden instruments according to claim 1, **characterized in that** it is produced by mixing two separately prepared emulsions, namely a first emulsion containing
• 1.5 units of volume Casein, made of low fat curd cheese and wooden-fired chalk of a pit,
• 2 units of volume saffron which is being dissolved concentrated in heated water,
• 2 units of volume Crapp being dissolved concentrated within water,
as well as a second emulsion, containing
• 3 units of volume turpentine,
• 3.75 units of volume of turpentine of Strassburg or Venice,
• 5 drops of potassium carbonate dissolved in water.

3. Varnish for wooden instruments, containing of
• Casein, made of low fat curd cheese and chalk of a pit,
• Saffron, dissolved in water,
• Madder, dissolved in water,
• various turpentines,
• Potassium carbonate, dissolved in water.

4. Varnish for wooden instruments according to claim 3, consisting of
• 1.5 units of volume Casein, produced of low fat curd cheese and wooden-fired chalk of a pit,
• 2 units of volume saffron dissolved concentrated in heated water,
• 2 units of volume madder dissolved concentrated in water,
• 3 units of volume turpentine,
• 3.75 units of volume of turpentine of Strassburg or Venice
• 5 drops of potassium carbonate dissolved in water.

5. Procedure for applying a varnish according to one of the claims 3 or 4, **characterized in that** the wooden is initially prepared by
a) adding a mixture of Casein which has been diluted in water onto to wooden,
b) adding nitric acid diluted in water and drying the the added material,
c) repeating step b) one or a few times as required,
thereafter, the pretreated wooden is primed such that
d) Casein which is diluted in water is once applied to the wooden,
e) that grounding is nicely grinded,
after that, the grounded wooden is painted such that
f) a varnish of casein, saffron diluted in warm water, turpentine or potassium carbonate diluted in water is applied with a brush and the spread is dried thereafter,
g) the dried varnish is nicely grinded with a scarf and later burnished with a soft rag.

6. Procedure for applying a varnish according to one of claims 3 to 4, **characterized in that** the wooden must first be pretreated such that
a) a mixture of Casein made of low fat curd cheese diluted in water and of wooden-fired chalk of a pit is applied onto the wooden,
b) nitric acid diluted in water is added and the spread is dried in the sun or by warm air,
c) the step b) is repeated one or a few times if needed, thereafter the pretreated wooden is grounded such that
d) casein which has been diluted in water is once applied onto the wooden,
e) that grounding is grindedwith a 400-grinding-cloth or with a cattail, later, the grounded wooden is painted by
f) applying a varnish made of a mixture of two emulsions, the first emulsion consisting of
• 1.5 units of volume casein, made of low fat curd cheese wooden-fired chalk of a pit,
• 2 units of colume saffron in preheated water which is diluted in a concentrated manner,
• 2 units of volume of mudder diluted in a concentrated manner in water,
as well as a second emulsion, containing
• 3 units of volume of turpentine,
• 3.75 units of volume of turpentine of Strassburg or Venice,
• 5 drops of potassium carbonate diluted in water,
the applying done with a brush and the spread is thereafter dried,
g) the dried varnish is smoothed and polished with a fine scarf with tripled soil and olive oil and later polished with a soft cloth.

## Revendications

1. Procédé de fabrication d'une laque pour instruments en bois, **caractérisé en ce qu'**elle est générée par un mélange de deux émulsions, qui sont préparées séparément, c'est-à-dire d'une première émulsion comportant:
• Caséine, générée à partir du fromage blanc allégé et de la chaux hydratée,
• Safran, dilué dans l'eau,
• Garance diluée dans l'eau,
• ainsi une deuxième émulsion, comportant:
• Térébenthine,
• Térébenthine Strasbourgeois ou Térébenthine Vénitienne,
• Carbonate de potassium dilué dans l'eau.

2. Procédé de fabrication d'une laque pour instruments en bois selon la revendication 1, **caractérisé en ce qu'**elle est générée par un mélange de deux émulsions, qui sont préparées séparément, c'est-à-dire d'une première émulsion comportant:
• 1,5 parties en volume de Caséine, générée à partir du fromage blanc allégé et de la chaux hydratée,
• 2 parties en volume de Safran, dilué dans l'eau,
• 2 parties en volume de Garance diluée dans l'eau,
• ainsi une deuxième émulsion, comportant:
• 3 parties en volume de Térébenthine,
• 3,75 parties en volume de Térébenthine Strasbourgeois ou Térébenthine Vénitienne,
• 5 gouttes de carbonate de potassium dilué dans l'eau.

3. Laque pour instruments à bois, constituée de:
• Caséine, générée à partir du fromage blanc allégé et de la chaux hydratée,
• Safran, dilué dans l'eau,
• Garance diluée dans l'eau,
• Plusieurs térébenthines,
• Carbonate de potassium dilué dans l'eau.

4. Laque pour instruments en bois selon la revendication 3, **caractérisé en ce qu'**elle est constituée de:
• 1,5 parties en volume de Caséine, générée à partir du fromage blanc allégé et de la chaux hydratée,
• 2 parties en volume de Safran, dilué dans l'eau,
• 2 parties en volume de garance diluée dans l'eau,
• 3 parties en volume de Térébenthine,
• 3,75 parties en volume de Térébenthine Strasbourgeois ou Térébenthine Vénitienne,
• 5 gouttes de carbonate de potassium dilué dans l'eau.

5. Procédé pour appliquer une laque selon une des revendications 3 ou 4, **caractérisé en ce que** le bois est prétraité:
a) en appliquant un mélange dilué de caséine dans l'eau sur le bois,
b) en appliquant l'acide nitrique dilué dans l'eau et en séchant l'application,
c) répéter éventuellement l'étape b) une ou plusieurs fois et ensuite le bois est traité en appliquant une couche d'apprêt, en
d) appliquant la caséine diluée dans l'eau une fois sur le bois,
e) cette couche d'apprêt est poncée soigneusement, et ensuite on applique la laque sur le bois, sur lequel on a appliqué la couche d'apprêt,
f) la laque, composée de caséine et de safran, diluée dans de l'eau chaude, la garance diluée dans de l'eau chaude, la térébenthine et le carbonate de potassium, diluées dans l'eau chaude, est appliquée avec un pinceau et l'application est ensuite séchée,
g) la laque séché est ensuite poncée soigneusement avec un fin tissu et polie ensuite avec un chiffon souple.

6. Procédé pour appliquer une laque selon une des revendications 3 ou 4, **caractérisé en ce que** le bois est prétraité:
a) en appliquant un mélange dilué de caséine dans l'eau et de chaux hydraté cuite au feux de bois sur le bois,
b) en appliquant l'acide nitrique dilué dans l'eau et en séchant l'application au soleil et au moyen d'air chaud,
c) répéter éventuellement l'étape b) une ou plusieurs fois et ensuite le bois est traité en appliquant une couche d'apprêt, en
d) appliquant la caséine diluée dans l'eau une fois sur le bois,
e) cette couche d'apprêt est poncée soigneusement au moyen d'un chiffon 400 ou une queue d'un chat,
et ensuite on applique la laque sur le bois, sur lequel on a appliqué la couche d'apprêt,
f) la laque, composée de deux émulsions, la première émulsion étant composé de
• 1,5 parties en volume de Caséine, générée à partir du fromage blanc allégé et de la chaux hydratée,
• 2 parties en volume de Safran, dilué dans l'eau,
• 2 parties en volume de garance diluée dans l'eau,
• La deuxième émulsion étant composée de
• 3 parties en volume de Térébenthine,
• 3,75 parties en volume de Térébenthine Strasbourgeois ou Térébenthine Vénitienne,
• 5 gouttes de carbonate de potassium dilué dans l'eau,
est appliquée avec un pinceau est l'application est ensuite séchée,
g) la laque séchée est ensuite poncée soigneusement avec un fin tissu avec la triple terre et de l'huile d'olive et ensuite polie avec un chiffon souple.
